# EUROPEAN PATENT APPLICATION

(11) **EP 1 995 093 A2**
(43) Date of publication of application: **26.11.2008**
(21) Application number: 08009207.5
(22) Date of filing: 19.05.2008
(51) Int. Cl.: B60H 1/00

(54) **Apparatus to control rotation of driven member**

(30) Priority: 22.05.2007 JP 2007135437
(71) Applicant: Calsonic Kansei Corporation, Tokyo 164-8602 (JP)
(72) Inventor: Nomura, Masato, Tokyo 164-8602 (JP); Sunaga, Hideki, Tokyo 164-8602 (JP)
(74) Representative: Grünecker, Kinkeldey, Stockmair & Schwanhäusser Anwaltssozietät

(57) **Abstract**

An apparatus to control rotation of a driven member (7), includes a rotation member (92) rotatably supported, a driving unit (8) to rotate the rotation member, a potentiometer (80) to detect an angular position of the rotation member in a detectable angle range (KH) thereof, and a control unit to control the driving unit to rotate the rotation member from a present angular position to a target angular position. The control unit controls the driving unit in a normal mode where the rotation member is rotated while confirming the present angular position of the rotation member when the rotation angle is less than 180 degrees, and controls the driving unit in a minimum mode where the rotation member is rotated from the present angular position to the target angular position via a non-detectable angle range of the potentiometer when the rotation angle is 180 degrees or more.

## Description

### BACKGROUND OF THE INVENTION

### Field of the Invention

The present invention relates to an apparatus to control a driving device to rotate a rotation member to drive a driven member and to control a rotational angle of the rotation member in accordance with an output of a potentiometer, and in particular, to an apparatus which is preferably used for controlling an angle of an opening of a door as a driven member in a vehicular air conditioning apparatus.

### Description of the Related Art

Conventionally, apparatuses for controlling an angle of an opening of a door of a vehicular air conditioning apparatus is known, wherein a rotation member linked to a door is rotated by a driving device in accordance with outputs from a potentiometer, in either a normal or a reverse direction within a detectable range of the potentiometer; as described in, for example, Japanese Patent No. 3,831,060.

With regard to such a technology for controlling the angle of the opening of the door of the vehicular air conditioning apparatus, a technology is also known, in which a cam linkage is rotated in a single direction, as described in, for example, Utility Model Registration No. 2,513,992.

In such a technology, a cam mechanism is provided between the cam linkage that is rotated by the driving device and a door axis, wherein, when the cam mechanism makes a single rotation, a sliding surface of a lead terminal of the cam linkage slides in a line with a surface of the cam that is formed in a door linkage that is linked to the door axis, and the door linkage is reciprocated with a single rotating movement of the cam linkage.

Whereas in the technology disclosed in Japanese Patent No. 3,831,060, the rotation member to rotate the door is rotated in either the normal or the reverse direction within a range of 180 degrees, and if the rotation member is rotated by more than 180 degrees to be moved from one terminal point to another terminal point within the range of the rotating of the door, there is a problem as follows.

When a normal operating range of the rotation member is set to 180 degrees or more, a condition arises when the rotation member is rotated from a given angular position to another given angular position wherein the rotation member is rotated by more than 180 degrees, and in such a circumstance, it becomes necessary to expend time in the rotation of the rotation member, and it is possible that a responsiveness of the control thereof may also suffer a decline as a result.

On the other hand, in the technology disclosed in Utility Model Registration No. 2,513,992, the door is reciprocated with a single rotation of the cam linkage, and thus, it is possible to perform, in a short time, a rotation from a terminal angular position that is a first terminal angular position to another terminal angular position that is a second terminal angular position within the range of the rotating of the door.

When the door is rotated from an intermediate angular position to another intermediate angular position of the first terminal angular position and the second terminal angular position, however, a circumstance may arise wherein it is not possible to move the door to the intermediate angular position without first causing the door to pass through the first terminal angular position and the second terminal angular position, and in such a circumstance, it becomes necessary to rotate the door in a needless manner, and the responsiveness of the control thereof deteriorates as a result thereof even more than with the technology disclosed according to Japanese Patent No. 3,831,060.

### SUMMARY OF THE INVENTION

Accordingly, an objective of the present invention is to provide an apparatus to control a rotation member that is capable of improving the responsiveness of the control thereof when causing the rotation member to rotate at an angle greater than 180 degrees.

To achieve the above object, an apparatus to control rotation of a driven member includes a rotation member which is rotatably supported in normal and reverse directions to drive the driven member, a driving unit configured to rotate the rotation member, a potentiometer configured to detect an angular position of the rotation member in a detectable angle range thereof and a control unit configured to control the driving unit to rotate the rotation member from a present angular position detected by the potentiometer to a target angular position in the normal or reverse direction. The control unit has a normal control judging portion configured to judge whether or not a rotation angle between the present and target angular positions of the rotation member is less than 180 degrees in the normal or reverse direction. The control unit controls the driving unit in a normal mode where the driving unit rotates the rotation member while confirming the present angular position of the rotation member detected by the potentiometer when the normal control judging portion judges that the rotation angle is less than 180 degrees; and controls the driving unit in a minimum mode where the driving unit rotates the rotation member from the present angular position to the target angular position via a non-detectable angle range of the potentiometer in the reverse or normal direction when the normal control judging portion judges that the rotation angle is 180 degrees or more.

### BRIEF DESCRIPTION OF THE DRAWINGS

FIG. 1 is an explanatory view illustrating an apparatus to control a rotation member according to a first preferred embodiment of the present invention.
FIG. 2 is an explanatory view illustrating a relationship between an angular position of a potentiometer and a cam linkage of the rotation control apparatus according to the first embodiment.
FIG. 3 is a conceptual diagram illustrating a vehicular air conditioning apparatus applied for the rotation control apparatus according to the first embodiment.
FIG. 4 is a flowchart illustrating a flow of a minimum operation start process according to the first embodiment.
FIG. 5 is a flowchart illustrating a flow of a minimum rotation control process according to the first embodiment.

### DETAILED DESCRIPTION OF THE PREFERRED EMBODIMENTS

The preferred embodiments of the present invention will be explained with reference to the attached drawings.

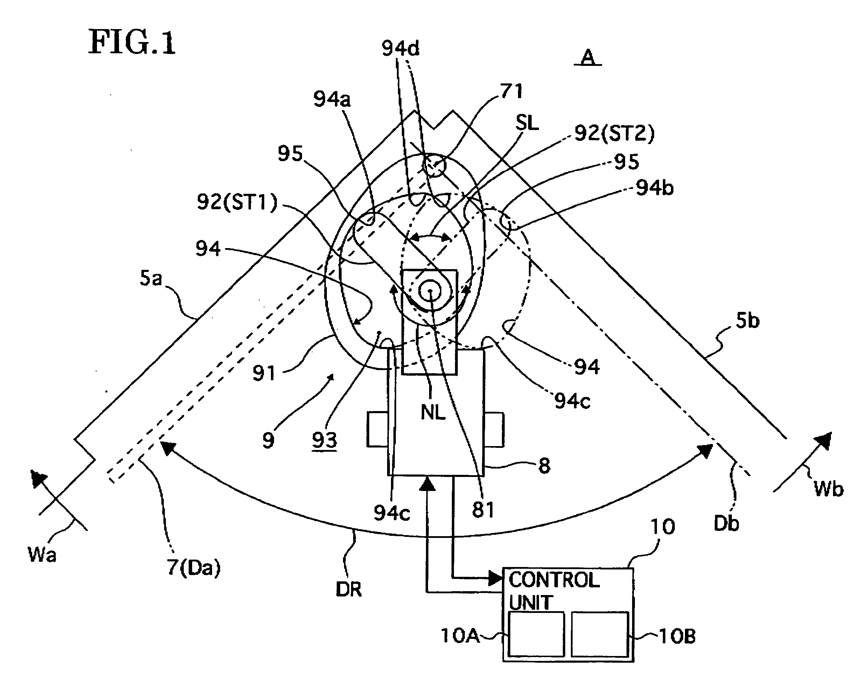

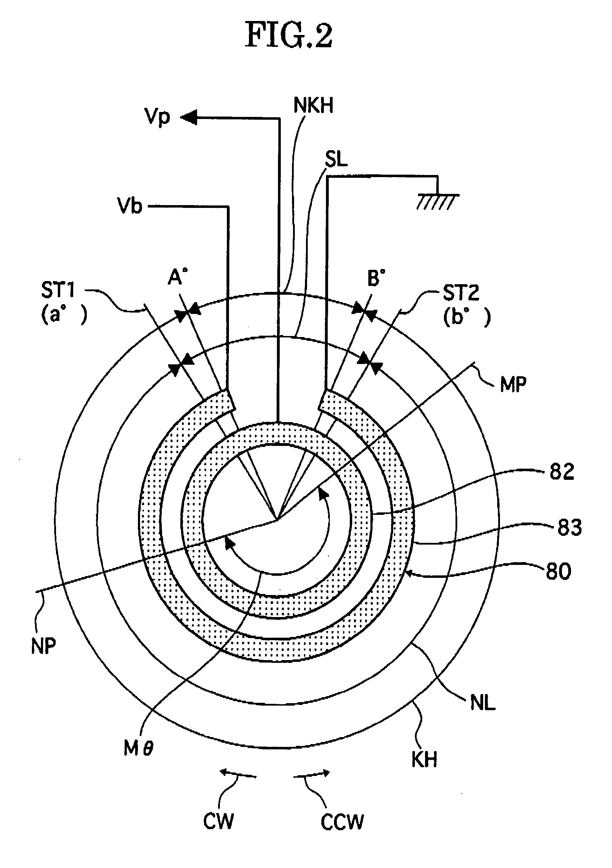

As shown in FIGs.1 and 2, an apparatus to control rotation of a driven member 7 such as a door, according to an embodiment of the present invention includes a rotation member 92 which is rotatably supported in normal and reverse directions CW, CCW to drive the door 7, a driving unit 8 configured to rotate the rotation member 92, a potentiometer 80 configured to detect an angular position of the rotation member 92 in a detectable angle range KH thereof and a control unit 10 configured to control the driving unit 8 to rotate the rotation member 92 from a present angular position NP detected by the potentiometer 80 to a target angular position MP in a normal or reverse direction CW, CCW. The control unit 10 has a normal control judging portion 10A configured to judge whether or not a rotation angle between the present and target angular positions NP, MP of the rotation member 92 is less than 180 degrees in the normal or reverse direction CW, CCW. The control unit 10 controls the driving unit 8 in a normal mode where the driving unit 8 rotates the rotation member 92 while confirming the present angular position NP of the rotation member 92 detected by the potentiometer 80 when the normal control judging portion 10A judges that the rotation angle is less than 180 degrees, and controls the driving unit 8 in a minimum mode where the driving unit 8 rotates the rotation member 92 from the present angular position NP to the target angular position MP via a non-detectable angle range NKH of the potentiometer 80 in the reverse or normal direction CCW, CW when the normal control judging portion 10A judges that the rotation angle is 180 degrees or more.

In the rotation control apparatus according to an embodiment of the present invention, the control unit 10 controls the driving unit 8 to rotate the rotation member 92 while confirming the present angular position NP of the rotation member 92 in a normal operating angle range NL having more than 180 and less than 360 degrees, and the normal operating angle range NL is within the detectable angle range KH of the potentiometer 80. In addition, the control unit 10 may be configured to control the driving unit 8 to rotate the rotation member 92 without confirming the present angular position NP of the rotation member 92 when the normal control judging portion 10A judges that the rotation angle is 180 degrees or more.

In the rotation control apparatus according to an embodiment of the present invention, the control unit 10 includes a detectable range judging portion 10B configured to judge whether or not the rotation member 92 enters the detectable angle range KH of the potentiometer 80 from a non-detectable angle range NKH of the potentiometer 80, and the control unit 10 starts to confirm the present angular position NP of the rotation member 92 when the detectable range judging portion 10B judges that the rotation member 92 enters the detectable angle range KH of the potentiometer 80.

The rotation control apparatus according to an embodiment of the present invention may be used in an air-conditioning unit, and further includes a member 7 which is to be driven by the rotation member 92. The member 7 to be driven is a door which is installed in the air-conditioning unit and is rotatably provided between a first and second angular positions Da, Db having a predetermined rotation angle DR of less than 360 degrees from each other. A cam mechanism 91 may be provided between the rotation member 92 and the door 7 and transmits driving of the rotation member 92 to reciprocate the door 7 in the rotation angle range DR of the door 7 by being coupled with a rotation of the rotation member 92 through 360 degrees.

### (First Embodiment)

The preferred embodiments of the rotation control apparatus A according to the present invention will be explained in detail with reference to FIGs.1 to 5 as follows.

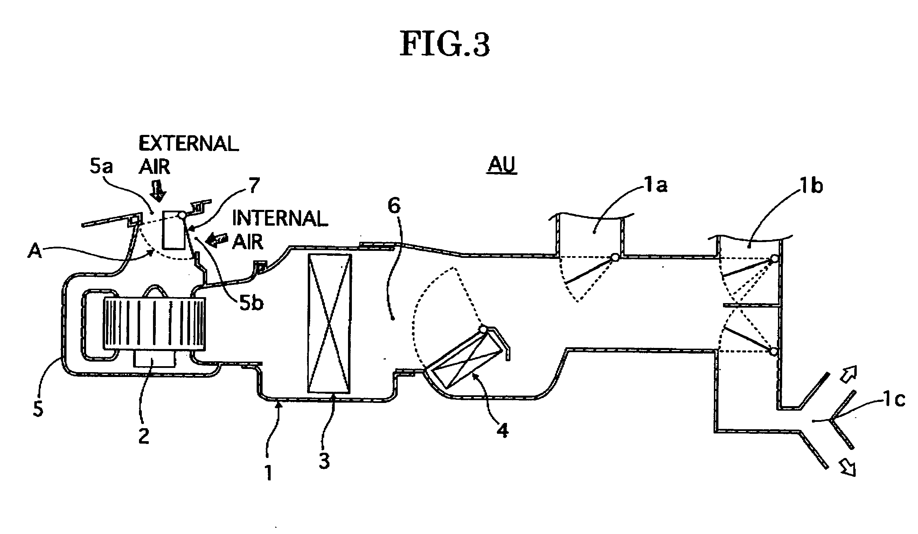

The rotation control apparatus A according to the first embodiment is installed into a vehicular air conditioning apparatus AU that is depicted in FIG.3. It is to be understood that the vehicular air conditioning apparatus AU is a known and established device, including a ventilator 2, an evaporator 3, and a heater core 4, that are contained within a unit case 1, and a ventilation path 6, which extends from an intake unit 5 to each respective discharge port 1a, 1b, and Ic.

The rotation control apparatus A according to the first embodiment is applied so as to cause an intake door 7, i.e., the member to be driven, which changes a degree of opening between an external air intake port 5a and an internal air intake port 5b of the intake unit 5.

The intake door 7 is supported by the unit case 1 rotatably about a door axis 71, as depicted in FIG.1, and, a rotating movement of the intake door 7 between an external air intake port fully closed position, i.e., a first angular position, Da, which is an angular position wherein the intake door 7 closes the external air intake port 5a, as denoted in FIG. 1 by a double dashed line, and an internal air intake port fully closed position, i.e., a second angular position, Db, which is an angular position wherein the intake door 7 closes the internal air intake port 5b, as denoted in FIG. 1 by a single dashed line, is regulated by a respective stopper (not shown) from rotating beyond the respective first angular position Da and the second angular position Db, i.e., in a direction that is denoted by a respective arrow Wa or Wb as depicted in FIG. 1, thereby facilitating a rotating movement of the intake door 7 within a door rotating range as the rotation angle range of the door 7, that is denoted by an arrow DR in FIG. 1.

The rotation of the door axis 71 is accomplished by the driving device as the driving unit 8. The cam mechanism 9 is installed between a driving axis 81 and the door axis 71.

The cam mechanism 9 includes a door linkage 91 and the cam linkage, i.e., the rotation member, 92.

The door linkage 91 is fixed to the door axis 71, and rotates as a single unit with the door axis 71, with a roughly elliptical cam hole 93 being formed within an interior of the door linkage 91, and a cam surface 94 being formed within an inner circumference of the cam hole 93.

The cam linkage 92 is disposed within the interior portion of the cam hole 93, a base terminal unit is rotatably supported in either a normal or a reverse direction, about the driving axis 81 that is made to rotate by the driving device 8, whereas a sliding surface of a lead terminal 95 is in contact with the cam surface 94. According to the first embodiment, with regard to FIG.2, it is to be understood that a clockwise direction is treated as a normal rotation direction, i.e., a direction that is denoted by an arrow CW in the drawing, and that a counterclockwise direction is treated as a reverse rotation direction, i.e., a direction that is denoted by an arrow CCW in the drawing.

In the present circumstance, the cam linkage 92 is positioned at a first final terminal angular position ST1, as denoted by a solid line in FIG.1, when the intake door 7 is positioned at the external air intake port fully closed angular position Da, while the cam linkage 92 is positioned at a second final terminal angular position ST2, as denoted by a dashed line in FIG. 1, when the intake door 7 is positioned at the internal air intake port fully closed angular position Db.

The cam surface 94 includes a first interrupt cam surface 94a, wherein the sliding surface 95 of the cam linkage 92 makes contact when the cam linkage 92 is positioned in the first final terminal angular position ST1, a second interrupt cam surface 94b, wherein the sliding surface 95 makes contact when the cam linkage 92 is positioned in the second final terminal angular position ST2, a first guide surface 94c, wherein the sliding surface 95 slides when the cam linkage 92 is between the first final terminal angular position ST1 and the second final terminal angular position ST2, and rotates within the normal operating range NL (refer to FIG. 2) that is greater than 180 degrees, i.e., a lower portion of the cam linkage 92 as depicted in FIG. 1, and a second guide surface 94d, wherein the sliding surface 95 slides when the cam linkage 92 is between the first final terminal angular position ST1 and the second final terminal angular position ST2, and rotates within a minimum rotation range SL (refer to FIG. 2) that is less than 180 degrees, i.e., an upper portion of the cam linkage 92 as depicted in FIG. 1.

In accordance with the present configuration, the intake door 7 rotates in the normal or the reverse direction in the door rotating range DR in line with the cam linkage 92 rotating in the normal or the reverse direction in the normal operating range NL, and the intake door 7 rotates in the reverse or the normal direction in the normal operating range NL even if the cam linkage 92 rotates in the normal or the reverse direction in the minimum rotation range SL. Put another way, when the cam linkage 92 rotates in the minimum rotation range SL, a direction of the rotation of the cam linkage 92 is opposite to a direction of the rotating of the intake door 7.

A relationship between an angle of a rotation of the cam linkage 92 and the potentiometer 80 that is installed in the driving device 8, will be explained with reference to FIG. 2.

The potentiometer 80 is a known technology; a simple description of a configuration thereof would be that the potentiometer 80 includes a first resistance body 82 and a second resistance body 83, which is positioned in two layers, one within the other, in an axis identical to the driving axis 81, wherein a reference voltage Vb is applied to a terminal of the second resistance body 83, and another terminal of the second resistance body 83 is grounded. A point of contact (not shown) is provided wherein the cam linkage 92 makes contact with both the first and the second resistance body 82 and 83, and it is possible to detect an angular position of the cam linkage 92 as the cam linkage 92 rotates by a change in an output voltage Vp that is emitted from the first resistance body 82. It would be permissible to apply the reference voltage Vb to the first resistance body 82 and to obtain the output from the second resistance body 83 instead.

In FIG.2, the angle of rotation when the cam linkage 92 is positioned at the first final terminal angular position ST1 is "a degrees", while the angle of rotation when the cam linkage 92 is positioned at the second final terminal angular position ST2 is "b degrees".

With an objective of avoiding a hunching with the potentiometer 80, the second resistance body 83 is placed within a range that is slightly outside the normal operating range NL of the cam linkage 92, thus facilitating a detection of an angle of rotation ranging up to "A degrees" and "B degrees", a range thereof being the angle detectable range KH, while, on the other hand, a range wherein the second resistance body 83 is not placed, and the output voltage Vp is a ground angular position, is the angle non-detectable range NKH.

The potentiometer 80 is connected to the control unit 10 that is depicted in FIG.1, and the control unit 10 controls the rotating of the intake door 7 so as to move an angle of opening of the intake door 7 toward a control target thereof, while performing a confirmation of the angular position thereof in accordance with the output of the potentiometer 80.

The control unit 10 controls the operation of the vehicular air conditioning apparatus AU, and, as per established art, the control unit 10 controls such an aspect as a temperature or a volume of air that is emitted by the vehicular air conditioning apparatus AU in order to maintain a temperature that is detected within a passenger compartment of a Vehicle at a set temperature that is set by a passenger therein.

In addition, the control unit 10 includes the normal control judging portion 10A configured to judge whether or not a rotation angle between the present and target angular positions NP, MP of the rotation member 92 is less than 180 degrees in the normal or reverse direction CW, CCW and the detectable range judging portion 10B configured to judge whether or not the rotation member 92 enters the detectable angle range KH of the potentiometer 80 from a non-detectable angle range NKH of the potentiometer 80.

Normally, when performing the control of angle of opening of the intake door 7, and the control of the rotating thereof, the control unit 10 controls the driving device 8 to rotate the cam linkage 92 while performing a confirmation of the angular position thereof in accordance with the output Vp of the potentiometer 80, and this corresponds to "a normal control mode" or "normal mode". In addition, the normal operating range NL corresponds to a rotation angle range in which the control unit 10 can control the driving device 8 in the normal control mode.

Put another way, in the control the angle of rotation of the cam linkage 92 by the control unit 10, a normal control, wherein the driving device 8 is driven to rotate the cam linkage 92 while the confirmation of the angular position is performed, is performed as well as a minimum rotational control, wherein the driving device 8 is forcibly driven to rotate the cam linkage 92 without the confirmation of the angular position being performed.

The normal control is performed to control the driving device 8 to rotate the cam linkage 92 within the normal operating range NL, whereas the minimum rotational control is performed to control the driving device 8 to rotate the cam linkage 92 within the minimum rotation range SL.

The normal control and the minimum rotational control is executed in response to a target angle of rotation M0, which is an angle within the normal operating range NL between the present angular position NP and the control target angular position MP, such that the normal control is executed when the target angle of rotation M*θ* is less than 180 degrees, and the minimum rotational control is executed when the target angle of rotation M*0* is 180 degrees or more.

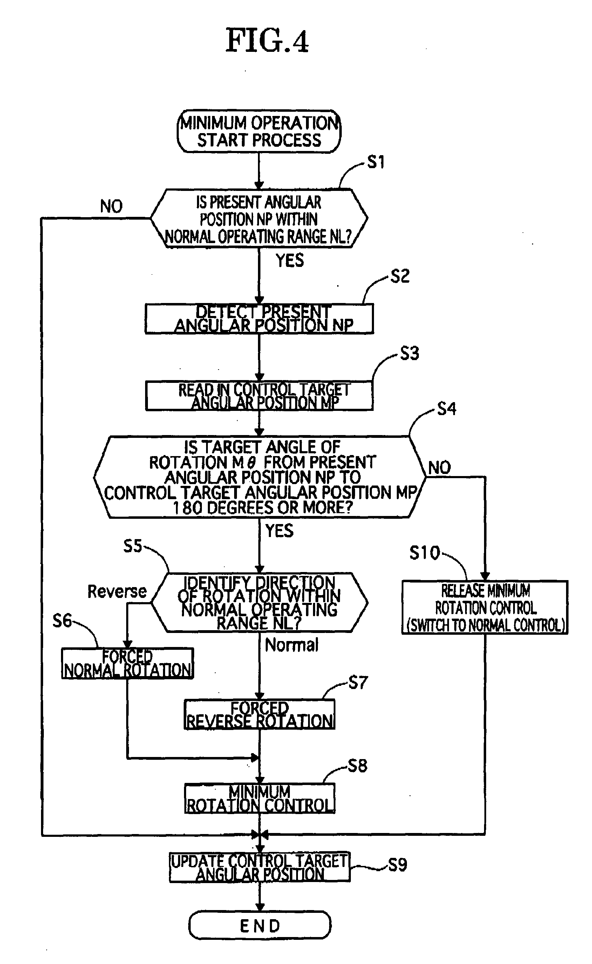

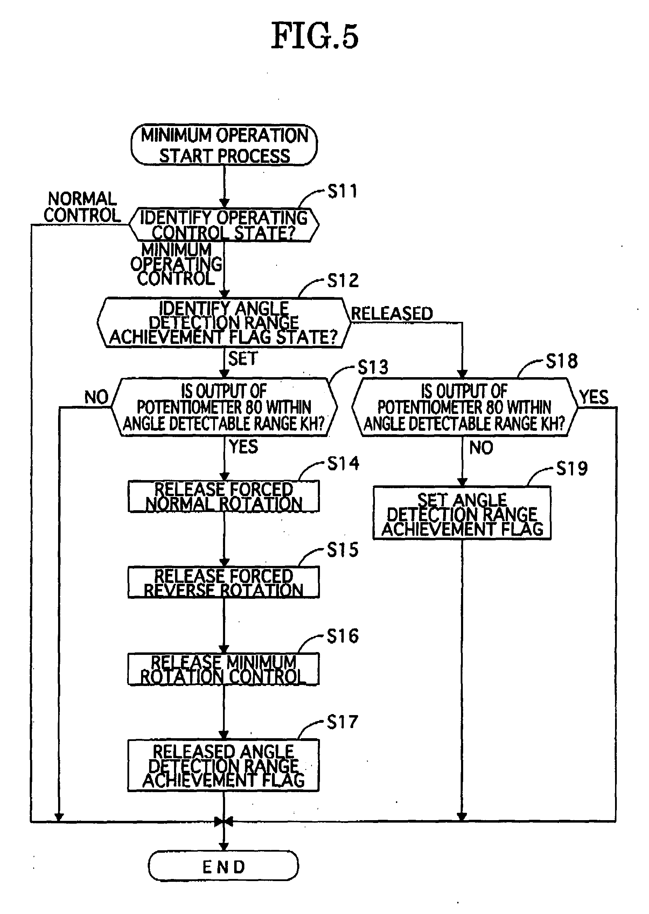

The normal control and the minimum rotational control will be explained with reference to the flowchart in FIGs.4 and 5, as follows. Note that the steps described below are mainly performed by the control unit 10.

At first, a minimum operation start process, in which a determination of a start of the minimum rotational control is performed, is described as per FIG. 4.

In step S1, it is determined whether or not the present angular position NP that is read in at the present point in time is within the normal operating range NL; if the present angular position NP is within the normal operating range NL, the process proceeds to step S2, whereas, if the present angular position NP is outside the normal operating range NL, the process proceeds to step S9.

In step S2, the present angular position NP is detected from the output Vp of the potentiometer 80, whereupon the process proceeds to step S3, wherein the control target angular position MP is read in.

In step S4, the target angle of the rotation M*θ*, which is the angle from the present angular position NP to the control target angular position MP within the normal operating range NL, is computed, and the normal control judging portion 10A of the control unit 10 judges whether or not the target angle of the rotation M *θ* is less than 180 degrees. If the target angle of rotation M*θ* is 180 degrees or more, the process proceeds to a determination of an operation direction in step S5, whereas if the target angle of rotation M*θ* is less than 180 degrees, the process proceeds to step S10, wherein the minimum rotational control is disengaged, i.e., the process proceeds to the normal control.

In the determination of the operation direction in step S5, it is determined whether a direction of the rotation to the control target angular position MP within the normal operating range NL is the normal direction or the reverse direction, and if the direction of the rotation thereof is the reverse direction, i.e., the direction of the arrow CCW, the process proceeds to step S6, wherein a forced normal rotation is set to the driving device 8, whereas if the direction of the rotation thereof is the normal direction, i.e., the direction of the arrow CW, the process proceeds to step S7, wherein a forced reverse rotation is set to the driving device 8. Put another way, when the forced operation is applied, the cam linkage 92 is rotated in the direction opposite to the direction of rotation that applies under the normal control.

In step S8, a minimum operation control is set and thereafter, in step S9, the control target angular position MP is updated to a latest value thereof.

Next, a flow of a process of the minimum rotational control that is set in step S8, is described with reference to the flowchart in FIG.5.

In step S11, as an initial process of the minimum rotational control, it is determined whether a setting state of an operation control is the normal control or the minimum operation control, and if the setting state thereof is the normal control, the present flow is terminated, whereas, if the setting state thereof is the minimum operation control, the process proceeds to step S12. It is to be understood that the present determination is performed in order to prevent a control being performed in error, such as due to static or other interference.

In step S12, by the angle detectable range judging portion 10B, it is determined whether an angle detection range achievement flag is in a set state or in a released state, and if the angle detection range achievement flag is in the set state, the process proceeds to step S13, whereas, if the angle detection range achievement flag is in the released state, the process proceeds to step S18.

It is to be understood that the angle detection range achievement flag (described hereinafter) is set when the cam linkage 92 leaves the angle detectable range KH, and is released when the cam linkage 92 returns to the angle detectable range KH thereafter from the angle non-detectable range NKH.

In step S13, it is determined whether or not the output of the potentiometer 80 is within the angle detectable range KH, and if the output of the potentiometer 80 is outside the angle detectable range KH, the present flow is terminated, whereas, if the output of the potentiometer 80 is within the angle detectable range KH, then, in step S14 and step S15, both the forced normal rotation and the forced reverse rotation are released, the minimum rotational control is released in step S16, and the angle detection range achievement flag is released in step S17.

If the angle detection range achievement flag is released in step S12, the process proceeds to step S18, wherein it is determined whether or not the output of the potentiometer 80 is within the angle detectable range KH, and if the output of the potentiometer 80 is outside the angle detectable range KH, the present flow is terminated, whereas, if the output of the potentiometer 80 is within the angle detectable range KH, the process proceeds to step S19, wherein the angle detection range achievement flag is set.

An operation according to the first embodiment, when the cam linkage angle of rotation is less than 180 degrees is described as follows.

When the cam linkage angle of rotation is less than 180 degrees, such as when causing the intake door 7 to rotate to an intermediate angular position that causes an intake of internal and external air from the internal air intake port fully closed angular position Db, or, conversely, when causing the intake door 7 to rotate to the intermediate angular position that causes the intake of internal and external air from the external air intake port fully closed angular position Da, or else when altering the angle of opening of the intake door 7 with regard to the intermediate angular position, the operation according to the first embodiment is performed such as follows.

When the angle of rotation of the cam linkage 92 is less than 180 degrees, such as per the preceding, then, with regard to the flowchart in FIG.4, the process proceeds to step S1, S2, S3, S4, and then, S10, in turn, wherein the normal control is executed, whereby the minimum rotational control is released, and the cam linkage 92 is rotated within the normal operating range NL. In such a circumstance, the control unit 10 controls the driving device 8 to rotate the cam linkage 92 until the position of the cam linkage 92 reaches the control target angular position MP, while confirming the present angular position NP by the output Vp of the potentiometer 80.

A case where the target angle of rotation M*θ* of the cam linkage 92, from the present angular position NP to the control target angular position MP, is 180 degrees or more is described as follows.

When an exhaust sensor (not shown) detects that the external air is in a degraded environment state, presuming, as an instance, an external air intake state, wherein the intake door 7 is positioned at or near the internal air intake port fully closed angular position Db, the control unit 10 controls the driving device 8 to rotate the intake door 7 to the external air intake port fully closed angular position Da, which, in such a circumstance, results in the target angle of rotation M*θ* of the cam linkage 92, from the present angular position NP to the control target angular position MP, exceeding 180 degrees.

An instance, in the present circumstance, where the intake door 7 is rotated from the internal air intake port fully closed angular position Db to the external air intake port fully closed angular position Da, i.e., the cam linkage 92 is rotated from the second final terminal angular position ST2 to the first final terminal angular position ST1 is described as follows.

In such a circumstance, the cam linkage 92 is rotated from the present angular position, i.e., "b degrees" to the control target angular position, i.e., "a degrees", wherein the rotation thereof requires time to make a large rotation, with a angle of rotation of about 300 degrees, when the cam linkage 92 is rotated in the normal rotation direction with regard to the normal operating range NL.

On the other hand, when the cam linkage 92 is rotated in the reverse rotation direction, passing through the minimum rotation range SL, the angle of rotation is a slight angle, and it is thereby possible to cause the rotation of the cam linkage 92 in a short amount of time.

In such a circumstance, the control unit 10 adopts the process flow in which the minimum rotation control is performed, and with regard to the flowchart in FIG. 4, the process proceeds to step S1, S2, S3, S4, and then, S5, in turn.

With regard to performing the minimum rotation control, the illustrated example that is described herein results in the flow that applies being the process of steps S5, S7, and S8, in turn, which involves the cam linkage 92 being set to the minimum rotation control after being set to the forced reverse rotation operation, which causes the cam linkage 92 to be rotated in reverse from the second final terminal angular position ST2. In the present circumstance, when the cam linkage 92 is set to the forced reverse rotation operation, the driving unit 8 is driven in a forced manner until the normal control is restored for example in step S13, regardless of the output Vp of the potentiometer 80.

With regard to an initial state at a point in time of the setting of the minimum operation control, the angle detection range achievement flag is in the released state, the cam linkage 92 is positioned within the angle detectable range KH, and thus, the process of the sequence of steps S12, S18, and then, END, in turn, is repeated.

Thereafter, when the cam linkage 92 exceeds a terminal of the angle "B degrees" of the angle detectable range KH, and thus, enters the angle non-detectable range NKH, the angle detection range achievement flag is set, in accordance with the process of steps S12, S18, and then S19 in turn.

Accordingly, hereinafter, when the cam linkage 92 is rotated in the angle non-detectable range NKH, the process of the sequence of steps S12, S13, and then END, in turn, is repeated.

Thereafter, when the cam linkage 92 exceeds a terminal component of the angle "A degrees" of the angle non-detectable range NKH, and thus, enters the angle detectable range KH, the process of steps S12, S13, S14, S15, S16, and then S17 in turn is executed, the release of both the forced normal rotation direction operation and the forced reverse rotation direction operation is accomplished, the minimum rotation control is released, and the angle detection range achievement flag is released.

Thereafter, the driving of the driving device 8 toward the latest control target angular position MP is continued, in accordance with the flow of steps from S1 to S9, and, furthermore, at the point in time when the cam linkage 92 returns to the angle detectable range KH, the normal control is restored, and the driving device 8 is driven in accordance with the output of the potentiometer 80, in accordance with the flow of steps S1, S2, S3, S4, and then S10 in turn.

Accordingly, under the circumstance described per the preceding instance, the cam linkage 92 is to be positioned at the first final terminal angular position ST1, which is the control target angular position, and the driving of the driving device 8 is interrupted at the present angular position.

Thus, when the cam linkage 92 is rotated from the second final terminal angular position ST2 to the first final terminal angular position ST1, such as per the present description, the cam linkage 92 is rotated in the reverse direction, within the minimum rotation range SL, rather than being rotated in the normal direction, within the normal operation range NL, with regard to FIG. 2. Consequently, the angle of rotation of the cam linkage 92 need only be a small angle, and it is possible to obtain a higher degree of responsiveness than is possible when the cam linkage 92 is rotated within the normal operation range NL.

In addition, it is possible for the cam linkage 92 to rotate the intake door 7 from the internal air intake port fully closed angular position Db to the external air intake port fully closed angular position Da with a smaller angle of rotation than the angle of rotation when rotating within the normal operation range NL, thus facilitating causing the intake door 7 to rotate within a shorter amount of time than would otherwise be required.

Accordingly, it is possible to close the external air intake port 5a in a short amount of time, thus facilitating a preventing of a polluted air from penetrating into the passenger compartment of the vehicle.

Moreover, whereas the intake door 7, which is caused to rotate by the cam linkage 92, is reversely rotated within the door rotating range DR, which is less than 180 degrees, rather than being rotated in the normal or the reverse direction through 360 degrees, such as per the cam linkage 92, the cam mechanism 9 is installed between the driving device 8 and the intake door 7, such that the intake door 7 is rotated within the door rotating range DR, even if the cam linkage 92 is rotated in the angle non-detectable range NKH.

Consequently, even when the cam linkage 92 is rotated in a minimum control mode, it is possible to apply the present invention with regard to the vehicular air conditioning apparatus AU, without the intake door 7 being rotated beyond the door rotating range DR, which is the range of the normal rotation thereof.

Furthermore, when executing the minimum rotation control, both the forced normal rotation and the forced reverse rotation is executed, with the confirmation of the angular position by the potentiometer 80 not being performed, and thus, it becomes possible to rotate the cam linkage 92 in the angle non-detectable range NKH, thereby facilitating the execution of the present invention.

While the first embodiment according to the present invention has been described herein with reference to the attached drawings, a concrete configuration according to the present invention is not limited thereto, and alterations of design that does not exceed the concept according to the present invention are included within the present invention.

As an instance thereof, whereas the intake door 7 of the vehicular air conditioning apparatus AU is denoted according to the first embodiment as a member to be driven, the first embodiment is not limited thereto, and it would be possible to apply the denotation thereof to a door of another vehicular air conditioning apparatus, and, moreover, the application thereof to such as an industrial device or a household electrical product would also be possible.

When the member to be driven differs from the member to be driven that is denoted according to the first embodiment, the rotation member is similarly not limited to the cam linkage 92 that configures a portion of the cam mechanism 9, such as is denoted according to the first embodiment, and it would be permissible for the rotation member to be a rotation member that rotates around another drive axis.

Whereas an instance is denoted according to the first embodiment wherein the cam mechanism 9 is installed between the drive axis 81 and the intake door 7, such a cam mechanism 9 would not be necessary in a circumstance wherein the member to be driven, which is driven by the rotation member, is applied to a member that rotates together with the rotation member.

Whereas an instance is denoted according to the first embodiment wherein it is determined in step S15 whether or not the process returns to the angle detectable range KH upon the termination of the minimum rotation control, the present invention is not limited thereto, and it would be permissible, for instance, to determine whether or not a preset time has passed, or to detect, via a limit switch, that the rotation member has passed a given angular position.

Whereas the cam linkage 92 in an arm shape is denoted according to the first embodiment as the rotation member, the rotation member is not limited to the linkage, provided that the rotation member is a member that is rotated by the driving device.

With regard to the vehicular air conditioning apparatus according to the present invention, if the angle of rotation within the normal operating range is greater than 180 degrees when the rotation member is rotated from the present angular position to the control target angular position, the rotation control apparatus executes the minimum rotation control, executing the minimum rotation control so as to rotate the rotation member to the control target angular position through the angle non-detectable range that is external to the angle detectable range of the potentiometer.

In such a circumstance, the actual angle of rotation of the rotation member is an angle of less than 180 degrees, and thus, it is possible to rotate the rotation member in a shorter time, and to improve the responsiveness of the control, more than a circumstance wherein the rotation member is rotated within only the angle detectable range.

Put another way, when the angle between the present angular position and the control target angular position within the normal operating range is 180 + a degrees, the angle of rotation according to the minimum rotation control is 180 - a degrees, and it would be possible to shorten the time to rotate by an amount of time to rotate 2 × a degrees.

According to the rotation control apparatus according to an embodiment of the present invention, when the rotation member is rotated within the angle non-detectable range during the minimum rotation control, canceling the confirmation of the angular position by the potentiometer facilitates rotating the rotation member within the angle non-detectable range.

The confirmation of the angular position by the potentiometer starts once more when the rotation member returns from the angle non-detectable range to the angle detectable range, thereby facilitating rotating the rotation member to the control target angular position.

The rotation control apparatus according to an embodiment of the present invention is applied to the rotation of the door of the air conditioning unit, and is of a construction wherein, for instance, normally, the door of the air conditioning unit is rotated within the door rotating range, which is set to an angle that is less than 360 degrees, of a range between the first terminal angular position, which is treated as a port being fully closed, and the second terminal angular position, which is treated as the port being fully open and another port being fully closed, and the rotation thereof outside of the door rotating range being regulated by such as a stopper.

Conversely, when the rotation member is rotated within the angle non-detectable range during the minimum rotation control, the door being rotated as a single unit with the rotation member will result in the rotation thereof outside of the door rotating range, and thus, the rotation thereof will not be possible.

As a result, according to an embodiment of the present invention, the cam mechanism is installed between the door and the rotation member, such that the door is rotated within the door rotating range, regardless of whether the rotation member is rotated within the normal operating range or within the angle non-detectable range.

Thus, it is possible to apply the rotation control apparatus according to an embodiment of the present invention, which provides the benefits described herein, even when the member to be driven is a door that is rotated within the door rotating range of less than 360 degrees.

Although the present invention has been described in terms of exemplary embodiments, it is not limited thereto. It should be appreciated that variations may be made in the embodiments described by persons skilled in the art without departing from the scope of the present invention as defined by the following claims.

## Claims

1. An apparatus to control rotation of a driven member (7), comprising:
a rotation member (92) which is rotatably supported in normal and reverse directions(CW, CCW) to drive the driven member;
a driving unit (8) configured to rotate the rotation member;
a potentiometer (80) configured to detect an angular position of the rotation member in a detectable angle range (KH) thereof and
a control unit (10) configured to control the driving unit to rotate the rotation member from a present angular position (NP) detected by the potentiometer to a target angular position (MP) in the normal or reverse direction,
wherein the control unit has a normal control judging portion (10A) configured to judge whether or not a rotation angle between the present and target angular positions of the rotation member is less than 180 degrees in the normal or reverse direction,
wherein the control unit controls the driving unit in a normal mode where the driving unit rotates the rotation member while confirming the present angular position of the rotation member detected by the potentiometer when the normal control judging portion judges that the rotation angle is less than 180 degrees; and controls the driving unit in a minimum mode where the driving unit rotates the rotation member from the present angular position to the target angular position via a non-detectable angle range (NKH) of the potentiometer in the reverse or normal direction when the normal control judging portion judges that the rotation angle is 180 degrees or more.

2. The apparatus according to claim 1, wherein the control unit controls the driving unit to rotate the rotation member while confirming the present angular position of the rotation member in a normal operating angle range (NL) having more than 180 and less than 360 degrees; and
the normal operating angle range is within the detectable angle range of the potentiometer.

3. The apparatus according to claim 1, wherein the control unit controls the driving unit to rotate the rotation member without confirming the present angular position of the rotation member when the normal control judging portion judges that the rotation angle is 180 degrees or more.

4. The apparatus according to claim 2, wherein the control unit controls the driving unit to rotate the rotation member without confirming the present angular position of the rotation member when the normal control judging portion judges that the rotation angle is 180 degrees or more.

5. The apparatus according to claim 1, wherein the control unit includes a detectable range judging portion (10B) configured to judge whether or not the rotation member enters the detectable angle range of the potentiometer from the non-detectable angle range of the potentiometer; and
wherein the control unit starts to confirm the present angular position of the rotation member when the detectable range judging portion judges that the rotation member enters the detectable angle range of the potentiometer.

6. The apparatus according to claim 2, wherein the control unit includes a detectable range judging portion (10B) configured to judge whether or not the rotation member enters the detectable angle range of the potentiometer from the non-detectable angle range of the potentiometer; and
wherein the control unit starts to confirm the present angular position of the rotation member when the detectable range judging portion judges that the rotation member enters the detectable angle range of the potentiometer.

7. The apparatus according to claim 3, wherein the control unit includes a detectable range judging portion (10B) configured to judge whether or not the rotation member enters the detectable angle range of the potentiometer from the non-detectable angle range of the potentiometer; and
wherein the control unit starts to confirm the present angular position of the rotation member when the detectable range judging portion judges that the rotation member enters the detectable angle range of the potentiometer.

8. The apparatus according to claim 4, wherein the control unit includes a detectable range judging portion (10B) configured to judge whether or not the rotation member enters the detectable angle range of the potentiometer from the non-detectable angle range of the potentiometer; and
wherein the control unit starts to confirm the present angular position of the rotation member when the detectable range judging portion judges that the rotation member enters the detectable angle range of the potentiometer.

9. The apparatus according to claim 1, which is used in an air-conditioning unit (AU), further comprising
a member (7) which is to be driven by the rotation member, the member to be driven being a door which is installed in the air-conditioning unit and is rotatably provided between a first and second angular positions (Da, Db) having a predetermined rotation angle (DR) of less than 360 degrees from each other; and
a cam mechanism (91) which is provided between the rotation member and the door and transmits driving of the rotation member to reciprocate the door in the rotation angle range of the door by being coupled with a rotation of the rotation member through 360 degrees.

10. The apparatus according to claim 2, which is used in an air-conditioning unit (AU), further comprising
a member (7) which is to be driven by the rotation member, the member to be driven being a door which is installed in the air-conditioning unit and is rotatably provided between a first and second angular positions (Da, Db) having a predetermined rotation angle (DR) of less than 360 degrees from each other; and
a cam mechanism (91) which is provided between the rotation member and the door and transmits driving of the rotation member to reciprocate the door in the rotation angle range of the door by being coupled with a rotation of the rotation member through 360 degrees.

11. The apparatus according to claim 3, which is used in an air-conditioning unit (AU), further comprising
a member (7) which is to be driven by the rotation member, the member to be driven being a door which is installed in the air-conditioning unit and is rotatably provided between a first and second angular positions (Da, Db) having a predetermined rotation angle (DR) of less than 360 degrees from each other; and
a cam mechanism (91) which is provided between the rotation member and the door and transmits driving of the rotation member to reciprocate the door in the rotation angle range of the door by being coupled with a rotation of the rotation member through 360 degrees.

12. The apparatus according to claim 5, which is used in an air-conditioning unit (AU), further comprising
a member (7) which is to be driven by the rotation member, the member to be driven being a door which is installed in the air-conditioning unit and is rotatably provided between a first and second angular positions (Da, Db) having a predetermined rotation angle (DR) of less than 360 degrees from each other; and
a cam mechanism (91) which is provided between the rotation member and the door and transmits driving of the rotation member to reciprocate the door in the rotation angle range of the door by being coupled with a rotation of the rotation member through 360 degrees.
